# EUROPÄISCHE PATENTSCHRIFT

(11) **EP 0 641 710 B1**
(45) Veröffentlichungstag und Bekanntmachung des Hinweises auf die Patenterteilung: **17.04.1996**
(21) Anmeldenummer: 94113006.4
(22) Anmeldetag: 20.08.1994
(51) Int. Cl.: B62J 1/28

(54) **Sitzhilfe**
Auxiliary seat
Siège auxiliaire

(30) Priorität: 02.09.1993 DE 9313230 U; 15.12.1993 DE 9319246 U
(43) Veröffentlichungstag der Anmeldung: 08.03.1995
(73) Patentinhaber: Stamatakis, Robert, D-97082 Würzburg (DE)
(72) Erfinder: Stamatakis, Robert, D-97082 Würzburg (DE)
(74) Vertreter: Schlagwein, Udo, Dipl.-Ing.

(56) Entgegenhaltungen:
- DE-A- 2 539 643
- DE-U- 9 108 807
- DE-U- 9 201 550
- GB-A- 2 172 799

## Beschreibung

Die Erfindung betrifft eine Sitzhilfe zur Befestigung auf einer Sitzbank eines Motorrades oder Motorrollers, insbesondere für ein mitfahrendes Kind, bei der eine Sitzfläche mittels eines Gurtes auf der Sitzbank befestigbar ist und die eine Rückenlehne hat.

Eine Sitzhilfe der vorstehenden Art ist Gegenstand der DE-A-25 39 643. Die bekannte Sitzhilfe hat eine flexible Sitzfläche, welche mittels des Gurtes an jeder Seite der Sitzbank an dort fest vorgesehenen Befestigungselementen der Sitzbank befestigt wird. Die Rückenlehne ist lediglich an ihrer Unterkante mit der flexiblen Sitzfläche verbunden, so daß sie um eine quer zur Sitzbank verlaufende Achse verschwenkt werden kann. Ihre zum Stützen des Rückens einer auf der Sitzhilfe sitzenden Person erforderliche, aufrechte Position wird dadurch erreicht, daß der Fahrer des Motorrades oder Motorrollers die beiden Enden eines an der Rückenlehne befestigten Gurtes um seinen eigenen Körper in Bauchhöhe schlingt und vor seinem Bauch miteinander verbindet. Der an der Rückenlehne befestigte Gurt umschlingt dann den Fahrer und die mitfahrende Person gemeinsam.

Die bekannte Sitzhilfe kann nur an eine Sitzbank angebracht werden, welche an jeder Seite das zur Befestigung der Sitzhilfe erforderliche Befestigungselement aufweist. Sie eignet sich deshalb nicht als Zubehör für Motorräder und Motorroller. Weiterhin wird die mitgeführte Person durch den an der Rückenlehne angebrachten Gurt gegen den Rücken des Fahrers gehalten, was oftmals als unangenehm empfunden wird. Hinzu kommt, daß vor dem Absteigen der Fahrer zunächst diesen Gurt lösen muß, so daß dann die Rückenlehne nach hinten klappt und ein mitfahrendes Kind auf der Sitzbank wenig Halt hat. Auch wenn der Fahrer sein Fahrzeug schiebt, beispielsweise vom Bürgersteig auf die Straße, kann ein mitfahrendes Kind leicht von der Sitzbank fallen.

Die US-A-4,909,522 zeigt auch schon eine Sitzhilfe für einen Fahrradsattel, welche eine starre Rückenlehne und zwei seitlich nach unten über den Fahrradsattel greifende Seitenteile hat. Die Sitzhilfe wird dadurch auf dem Sattel gehalten, daß die Seitenteile die beiden nach unten gerichteten, seitlichen Kanten des Fahrradsattels umgreifen. Da ein Fahrradsattel von vorn nach hinten breiter wird und seine Seiten nach hinten in der Höhe zunehmen, kann man die Sitzhilfe einfach von vorn auf den Fahrradsattel aufschieben.

Die Sitzhilfe nach der US-A-4,909,522 stellt lediglich eine Rückenlehne für den Benutzer des Fahrradsattels dar und eignet sich nicht dazu, eine weitere Person, insbesondere ein Kind, auf dem Zweirad mitzuführen.

Der Erfindung liegt das Problem zugrunde, eine Sitzhilfe der eingangs genannten Art zur Befestigung auf eine Sitzbank so auszubilden, daß sie ohne Veränderung der Sitzbank auf ihr befestigbar ist und durch die eine mitgeführte Person möglichst sicheren Halt findet.

Dieses Problem wird erfindungsgemäß dadurch gelöst, daß die Sitzhilfe zwei durch die Sitzfläche und die Rückenlehne miteinander verbundene, gegenüber der Sitzfläche nach unten hin weitergeführte, und dadurch seitlich teilweise über die Sitzbank greifende Seitenteile hat, daß der Gurt an diesen Seitenteilen befestigt und zum Durchführen unterhalb der Sitzbank quer zu ihrer Haupterstreckung ausgebildet ist.

Eine solche Sitzhilfe kann man einfach von oben her auf das rückwärtige Ende einer Sitzbank aufsetzen und dann nach Hochklappen der Sitzbank den zur Befestigung der Sitzhilfe dienenden Gurt unterhalb der Sitzbank durchführen und festspannen. Die seitlich über die Sitzbank greifenden Seitenteile verhindern anschließend, daß die Sitzhilfe sich quer zur Sitzbank verschieben kann, so daß sie mit sehr geringem Aufwand und ohne daß an der Sitzbank oder dem Motorrad oder Motorroller irgendwelche Veränderungen vorgenommen werden müssen, sicher und rasch zu befestigen ist. Die erfindungsgemäße Sitzhilfe eignet sich besonders als auf der Sitzbank zu befestigender Kindersitz. Sie ermöglicht einem Kind einen sicheren Halt in der als Kindersitz ausgebildeten Sitzhilfe, ohne daß das Kind auf der Sitzhilfe angegurtet werden muß, was für Zweiradfahrer im Falle eines Unfalls vorteilhaft ist. Natürlich kann man die Sitzhilfe statt zur Mitnahme eines Kindes auch für einen Gepäcktransport benutzen.

Vorteilhaft ist es, wenn die Sitzfläche flexibel ist. Die Seitenteile werden dann durch das Niederdrücken der Sitzfläche aufgrund des Gewichtes einer auf der Sitzfläche sitzenden Person zueinander gespannt, wodurch sich eine zusätzliche Haltekraft auf der Sitzbank ergibt.

Wenn hinter der Sitzbank kein über die rückwärtige Kontur der Sitzhilfe ragender Gepäckträger oder Haltebügel für einen Sozius vorhanden ist, dann könnte eine ausschließlich durch den quer um die Sitzbank herum geschlungenen Gurt gehaltene Sitzhilfe nach hinten von der Sitzbank wegrutschen. Das kann auf einfache Weise dadurch vermieden werden, daß die Seitenteilen einen weiteren Gurt aufweisen, welcher zum Umschlingen eines vorn unterhalb der Sitzbank gelegenen Bereiches des Motorrades oder Motorrollers bemessen ist.

Die Sitzhilfe kann zusätzlich gegen ein Verrutschen nach vorn gesichert werden, wenn gemäß einer anderen Weiterbildung der Erfindung außenseitig an der Rückenlehne ein dritter Gurt zum Befestigen der Sitzhilfe an einem hinter ihr vorhandenen Gepäckträger, einem Haltebügel oder einer Befestigungsstelle an der Sitzbank befestigt ist. Eine solche Ausführungsform ist insbesondere dann vorteilhaft, wenn die als Kindersitz ausgebildete Sitzhilfe ihrerseits mit einem Anschnallgurt versehen wird, durch den ein auf der Sitzhilfe sitzendes Kind angegurtet wird. Weiterhin kann durch einen solchen rückwärtigen Gurt die Sitzhilfe nach vorn, unten und hinten festgespannt werden, wodurch ein Schaukeleffekt ausgeschlossen wird.

Die Sitzhilfe sitzt besonders fest auf der Sitzbank, wenn die teilweise über die Sitzbank greifenden, seitlich gegen die Sitzbank anliegenden Seitenteile zueinander von der Sitzfläche aus gesehen divergieren.

Die Sitzhilfe kann auch gegen ein Nachvornrutschen auf der Sitzbank dadurch gesichert werden, daß die Rückenlehne einen nach unten gerichteten, teilweise über die Sitzbank greifenden Haltebereich aufweist. Durch dieses Merkmal weist die Sitzhilfe in ihrer Unterseite eine lediglich nach vorn hin offene Ausnehmung auf, die eine Negativform des oberen Bereiches der Sitzbank darstellt.

Zur Handhabung der Sitzhilfe ist es vorteilhaft, wenn außenseitig an jedem Seitenteil jeweils ein Haltegriff angebracht ist.

Fußruhen könnten unmittelbar an jeder Seite der Seitenteile befestigt sein. Ihr Abstand von der Rückenlehne kann jedoch verändert werden, wenn der Sitzhilfe ein die Sitzbank in Querrichtung umschlingender Fußruhen-Haltegurt zugeordnet ist, welcher zu beiden Seiten der Sitzbank jeweils eine Fußruhe aufweist.

Die Erfindung läßt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig.1: einen Teilbereich eines Motorrollers mit einer Sitzbank und der darauf befestigten, erfindungsgemäßen Sitzhilfe in perspektivischer Darstellung,
- Fig.2: die Sitzhilfe nach Fig. 1 von vorn,
- Fig.3: die Sitzhilfe von der Seite.

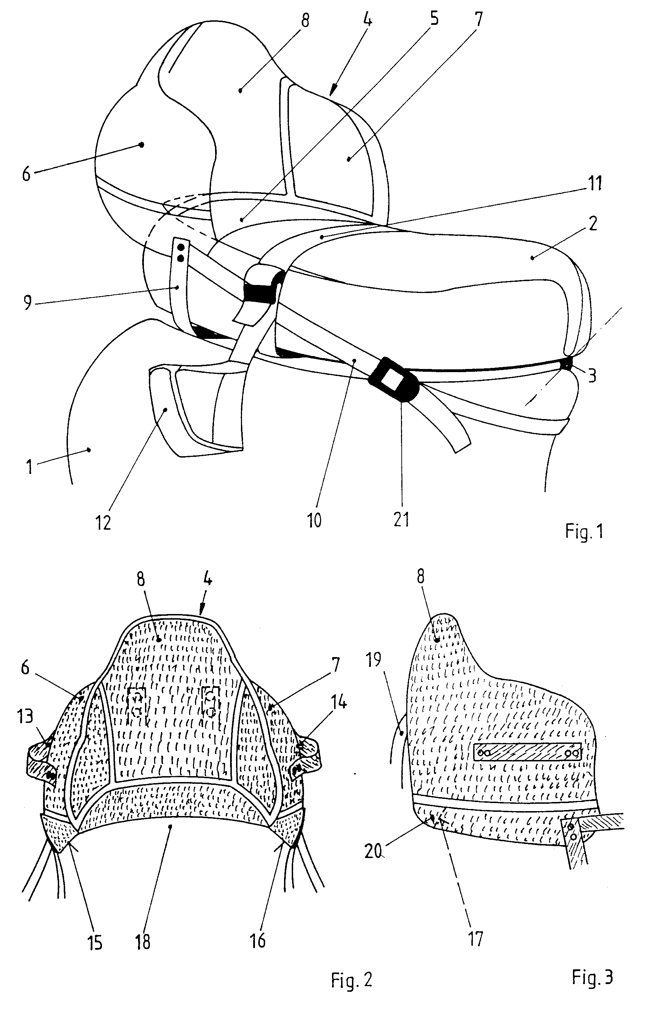

Die Figur 1 zeigt von einem Motorroller einen Teilbereich eines Aufbaus 1, auf dem eine übliche Sitzbank 2 befestigt ist, die um ein nahe ihrer Vorderkante angebrachtes Gelenk 3 geschwenkt werden kann, so daß ihre Rückseite sich nach oben bewegt. Diese bei Motorrollern übliche Verschwenkbarkeit der Sitzbank 2 ermöglicht es, ein im Aufbau 1 vorhandenes, nicht dargestellte Staufach und einen ebenfalls nicht gezeigten Einfüllstutzen für Kraftstoff zu erreichen.

Wichtig für die Erfindung ist eine Sitzhilfe 4, welche auf das rückwärtige Ende der Sitzbank 2 befestigt ist. Diese Sitzhilfe 4 hat eine flexible, auf der Sitzbank 2 von oben her aufliegende Sitzfläche 5, welche zwei Seitenteile 6, 7 und eine steife Rückenlehne 8 miteinander verbindet. Wichtig für die Erfindung ist es, daß die Seitenteile 6, 7 nach unten hin weitergeführt sind als bis zur Höhe der Sitzfläche 5, so daß sie seitlich gegen die Sitzbank anliegen.

An den Seitenteilen 6, 7 ist außenseitig jeweils ein Ende eines Gurtes 9 befestigt, der unten um die Sitzbank 2 herumgeschlungen ist. Dadurch wird die Sitzhilfe 4 auf der Sitzbank 2 gehalten.

An den Seitenteilen 6, 7 ist zusätzlich ein zweiter Gurt 10 befestigt, der um den vorderen Bereich des Aufbaus 1 herumgeführt ist und es dadurch ausschließt, daß die Sitzhilfe 4 nach hinten rutschen kann.

Vor der Sitzfläche 5 wird die Sitzbank von einem Fußruhen-Haltegurt 11 umschlungen, der an jeder Seite der Sitzbank 2 eine schlaufenartig ausgebildete Fußruhe 12 aufweist.

Sämtliche Gurte 9, 10, 11 und ein in Figur 3 gezeigter Gurt 19 sind mit leicht zu betätigenden Schnallen versehen, von denen eine Schnalle 21 in Figur 1 gezeigt und positioniert wurde.

Die Figur 2 läßt erkennen, daß außenseitig an jedem Seitenteil 6, 7 der Sitzhilfe 4 ein Haltegriff 13, 14 angebracht ist, wodurch die als Kindersitz ausgebildete Sitzhilfe bequem zu transportieren ist. Weiterhin ist zu erkennen, daß die seitlich über die in Figur 1 gezeigte Sitzbank 2 greifenden Bereiche der Seitenteile 6, 7 nach unten hin divergierende Anlageflächen 15, 16 aufweisen. Eine entsprechende Anlagefläche 17 ist in Verlängerung der Rückenlehne 8 an einem dort ausgebildeten Haltebereich 20 vorgesehen und in Figur 3 gestrichelt dargestellt. Dadurch hat die Sitzhilfe 4 in ihrer unteren Fläche eine nach unten hin offene Ausnehmung 18, die eine Negativform des oberen, rückwärtigen Bereiches der Sitzbank 2 bildet.

In Figur 3 ist zusätzlich dargestellt, daß auch hinten an der Rückenlehne 8 Gurte 19 befestigt sein können, die es ermöglichen, die Sitzhilfe 4 zusätzlich an einem nicht gezeigten, hinter ihr angeordneten Gepäckträger oder Haltebügel des Motorrades oder Motorrollers zu befestigen.

## Patentansprüche

1. Sitzhilfe zur Befestigung auf einer Sitzbank (2) eines Motorrades oder Motorrollers, insbesondere für ein mitfahrendes Kind, bei der eine Sitzfläche (5) mittels eines Gurtes (9) auf der Sitzbank (2) befestigbar ist und die eine Rückenlehne (8) aufweist, **dadurch gekennzeichnet**, daß die Sitzhilfe (4) zwei durch die Sitzfläche (5) und die Rückenlehne (8) miteinander verbundene, gegenüber der Sitzfläche nach unten hin weitergeführte, und dadurch seitlich teilweise über die Sitzbank (2) greifende Seitenteile (6, 7) hat, daß der Gurt (9) an diesen Seitenteilen (6, 7) befestigt und zum Durchführen unterhalb der Sitzbank (2) quer zu ihrer Haupterstreckung ausgebildet ist.

2. Sitzhilfe nach Anspruch 1, **dadurch gekennzeichnet**, daß die Sitzfläche (5) flexibel ist.

3. Sitzhilfe nach den Ansprüchen 1 oder 2, **dadurch gekennzeichnet**, daß die Seitenteilen (6, 7) einen weiteren Gurt (10) aufweisen, welcher zum Umschlingen eines vorn unterhalb der Sitzbank (2) gelegenen Bereiches des Motorrades oder Motorrollers bemessen ist.

4. Sitzhilfe nach zumindest einem der vorangehenden Ansprüche, **dadurch gekennzeichnet**, daß außenseitig an der Rückenlehne (8) ein dritter Gurt (19) zum Befestigen der Sitzhilfe (4) an einem hinter ihr vorhandenen Gepäckträger oder einem Haltebügel befestigt ist.

5. Sitzhilfe nach zumindest einem der vorangehenden Ansprüche, **dadurch gekennzeichnet**, daß die teilweise über die Sitzbank (2) greifenden, seitlich gegen die Sitzbank (2) anliegenden Seitenteile (6, 7) zueinander von der Sitzfläche (5) aus gesehen divergieren.

6. Sitzhilfe nach zumindest einem der vorangehenden Ansprüche, **dadurch gekennzeichnet**, daß die Rückenlehne (8) einen nach unten gerichteten, teilweise über die Sitzbank (2) greifenden Haltebereich (20) aufweist.

7. Sitzhilfe nach zumindest einem der vorangehenden Ansprüche, **dadurch gekennzeichnet**, daß außenseitig an jedem Seitenteil (6, 7) jeweils ein Haltegriff (13, 14) angebracht ist.

8. Sitzhilfe nach zumindest einem der vorangehenden Ansprüche, **dadurch gekennzeichnet**, daß ihr ein die Sitzbank (2) in Querrichtung umschlingender Fußruhen-Haltegurt (11) zugeordnet ist, welcher zu beiden Seiten der Sitzbank (2) jeweils eine Fußruhe (12) aufweist.

## Claims

1. Auxiliary seat for fastening on a bench (2) of a motorcycle or motor scooter, in particular for a child passenger, in which one seat face (5) can be fastened on the bench (2) by a belt (9) and which comprises a backrest (8), characterized in that the auxiliary seat (4) has two lateral parts (6, 7) which are connected to one another by the seat face (5) and the backrest (8), project downwardly relative to the seat face and laterally partially overlap the bench (2), in that the belt (9) is fastened on these lateral parts (6, 7) and is designed transversely to its main dimension for passage beneath the bench (2).

2. Auxiliary seat according to claim 1, characterized in that the seat face (5) is flexible.

3. Auxiliary seat according to claims 1 or 2, characterized in that the lateral parts (6, 7) comprise a further belt (10) which is dimensioned to loop a region of the motorcycle or motor scooter located beneath the bench (2) at the front.

4. Auxiliary seat according to at least one of the preceding claims, characterized in that a third belt (19) is fastened externally on the backrest (8) to fasten the auxiliary seat (4) on a luggage rack or hoop provided behind it.

5. Auxiliary seat according to at least one of the preceding claims, characterized in that the lateral parts (6, 7) partially overlapping the bench (2) and resting laterally against the bench (2) diverge from one another as viewed from the seat face (5).

6. Auxiliary seat according to at least one of the preceding claims, characterized in that the backrest (8) comprises a downwardly directed holding region (20) partially overlapping the bench (2).

7. Auxiliary seat according to at least one of the preceding claims, characterized in that a respective handle (13, 14) is arranged externally on each lateral part (6, 7).

8. Auxiliary seat according to at least one of the preceding claims, characterized in that it is allocated a footrest holding belt (11) which transversely loops the bench (2) and comprises a respective footrest (12) on either side of the bench (2).

## Revendications

1. Soutien d'assise pour fixation sur une selle (2) d'un motocycle ou d'un scooter, en particulier pour un passager-enfant, sur lequel une surface d'assise (5) est fixable au moyen d'une courroie (9) sur la selle (2) et qui présente un dossier (8), caractérisé en ce que le soutien d'assise (4) possède deux parties latérales (6, 7) venant coiffer latéralement en partie la selle (2), assemblées mutuellement par la face d'assise (5) et le dossier (8) et faisant suite à ladite face d'assise (5) en direction du pas et en ce que la courroie (9) est fixée sur ces parties latérales (6, 7) et est conformée pour passer sous la selle (2) transversalement à son extension principale.

2. Soutien d'assise selon la revendication 1, caractérisé en ce que la surface d'assise (5) est flexible.

3. Soutien d'assise selon la revendication 1 ou 2, caractérisé en ce que les parties latérales (6, 7) présentent une ceinture (10) plus large laquelle est dimensionnée pour entourer en forme de boucle une partie du motocycle ou du scooter située à l'avant sous le siège.

4. Soutien d'assise selon l'une au moins des revendications précédentes, caractérisé en ce que, du côté extérieur, est fixée sur le dossier (8) une troisième courroie (19) pour la fixation dudit support d'assise (4) sur un porte-bagages ou un étrier de maintien se trouvant à l'arrière de l'assise.

5. Soutien d'assise selon l'une au moins des revendications précédentes, caractérisé en ce que les parties latérales (6, 7) venant coiffer partiellement la selle (2), qui s'applique contre ladite selle (2), divergent l'une de l'autre si on les regarde à partir de la face d'assise (5).

6. Soutien d'assise selon l'une au moins des revendications précédentes, caractérisé en ce que le dossier (8) présente une zone de maintien (20) coiffant partiellement la selle (2) et orientée vers le bas.

7. Soutien d'assise selon l'une au moins des revendications précédentes, caractérisé en ce que, du côté extérieur, est fixée sur chaque partie latérale (6, 7) respectivement, une poignée de maintien (13, 14).

8. Soutien d'assise selon l'une au moins des revendications précédentes, caractérisé en ce que lui est associée une courroie de maintien servant de repose-pied qui entoure en forme de boucle la selle (2), cette courroie présentant des deux côtés de ladite selle (2) respectivement un repose-pied (12).
